# EUROPEAN PATENT APPLICATION

(11) **EP 2 027 998 A1**
(43) Date of publication of application: **25.02.2009**
(21) Application number: 08162085.8
(22) Date of filing: 08.08.2008
(51) Int. Cl.: B32B 27/12, B32B 5/26, D06N 7/00, D06N 3/00, B32B 38/00

(54) **Treated synthetic fabric**

(30) Priority: 09.08.2007 IT TO20070595
(71) Applicant: Mectex S.p.A., 22036 Erba CO (IT); Berofin S.R.L., 22071 Cadorago (CO) (IT)
(72) Inventor: Fassi, Aurelio, 22036 Erba (Como) (IT); Ciarleglio, Aldo, 22071 Cadorago (Como) (IT)
(74) Representative: Robba, Pierpaolo

(57) **Abstract**

A treated synthetic fabric with high liquid absorption capabilities, particularly suitable for use in the medical field, and a process for manufacturing such fabric.

The fabric includes at least a layer of a continuous fiber synthetic fabric, preliminarily submitted to plasma treatment and coupled to a second layer formed from one or more layers selected from: resin layer, PU membrane, PTFE membrane, PTFE+PU membrane, and eventually a third layer of another synthetic fabric.

The process includes the steps of: subjecting a first layer of a synthetic fabric to a plasma treatment; joining said first treated layer with a second layer formed by one or more layers selected from: resin layer, PU membrane, PTFE membrane, PTFE+PU membrane, and eventually a third layer of another synthetic fabric through spreading and/or laminating operations, and eventually applying a third layer formed by another synthetic fabric that has been subjected or not to a plasma treatment.

## Description

The present invention concerns a treated synthetic fabric, and more precisely the invention concerns a synthetic fabric that is particularly suitable for use in the medical field, as well as a process to manufacture such fabric.

Fabrics for medical clothing and operating room equipments are currently made using natural fiber (cotton) fabrics or synthetic (polyester and polyamide) fabrics, or fabrics comprising a blending of natural and synthetic fibers.

Although the use of cotton fabrics tend to be discontinued since they are difficult to be sterilized and because they release to the environments fiber particles (since the cotton is a discontinuous fiber), cotton fabrics have nevertheless an advantageous liquid absorbing-and-holding capability, particularly in respect of the blood, and this is a particularly useful feature for the drape sheets and the clothing in surgical or operating rooms.

The fabrics made of synthetic fibers are rendered impermeable and transpiring by being laminated (coupled) with PU (polyurethane) membrane or PTFE membrane or bi-component = PTFE+PU membrane. Laminated fabrics comprising two or three layers are used.

Presently UNI standard EN 13795 provides for abandoning the use of discontinuous fibers in order to eliminate the drawback of particles releasing, and therefore for manufacturing the above mentioned fabrics, continuous synthetic fibers are being preferably used at present. On the other hand these latter fabrics have the drawback of a lack of liquid absorbency since synthetic fibers are intrinsically water-repellent.

In order to overcome this drawback, the known fabrics are subjected to processing or grinding treatments that "scratch" the surface of the fibers and make them hairy. Nevertheless such processes cannot alter the water-repellent nature of the synthetic fibers, and therefore such treatments only accomplish a liquid retaining effect rather than imparting to the fibers true hydrophilic properties.

Other prior art treatments impart a certain absorbency to the fabric that is nevertheless transitory since it is lost after a few washings.

It is therefore an object of the present invention to realize a new treated synthetic fabric adapted for being used in medical field that overcomes or at least reduces the above illustrated limitations and drawbacks.

According to the invention these objects are achieved through a synthetic fabric having good absorption properties (liquid absorbance) as claimed in claim 1, and through a process for manufacturing such a synthetic fabric as claimed in claim 4. Additional advantageous characteristics of the invention are recited in the dependent claims.

The two- or three-layer fabrics according to the invention can withstand a large number of washing and sterilizing processes, thus maintaining their liquid absorbance throughout the fabric life. Moreover they results advantageous in respect of the known disposable nonwoven fabrics (TNT in Italian) both in view of the ecological aspects and of the costs, particularly when considering the fact that such used disposable articles fall within the Special Solid Waste class.

The invention will now be illustrated with reference to some actually preferred but non limiting embodiments thereof.

The synthetic fabric according to the invention comprises at least one layer of a fabric formed by continuous fibers, that has been subjected to a plasma treatment, and then joined - through a spreading and/or a lamination process - to a second layer which, in the most general terms includes a layer of resins and/or PU and/or PTFE and/or PTFE+PU membranes.

Advantageously the fabric according to the invention can provide for a third layer formed by another synthetic fabric, in case previously subjected to a plasma treatment.

The Applicant has found that when synthetic fabrics are subjected to plasma treatments, they acquire hydrophilic characteristics without becoming hygroscopic as it would occur with natural fibers, while at the same time maintaining a continuous-fiber structure, that is without any tendency to release particles. These properties are particularly advantageous to meet the requirements of the textile products for the medical field, with particular respect to the drape sheets and the clothing of operating rooms.

The Applicant has further discovered that the plasma treatment improves the gluing or adhesivizing or polymerization processes of the products that are later joined to such plasma-treated products, with membranes being included. The improvement involves both the duration of the gluing as well as the resistance of the water-repellent sheets eventually applied to.

According to the process of the invention, the plasma-treated synthetic fabric is subsequently subjected to ennoblement processes.
These processes include one or more of the following treatments:
- laminating with PU and/or PTFE and/or bi-component = PU+PTFE membranes;
- spreading of a PU and/or PTFE and/or PU+PTFE (bi-component) resin;
- subsequent or simultaneous laminating with other synthetic fabric.

When using laminating processes, the fabric is joined with PU or PTFE or PU+PTFE (bi-component) membranes through an adhesivizing process according to the following steps on laminating machines (even hot-melt);
a) micro spot and/or all-over deposition of the PU adhesive with a "mesch" comprised between 3 and 40 over the whole surface of the membrane;
b) laminating the membrane onto the fabric at a temperature comprised between 50°C and 210°C, the advancing speed and the compression of the two layers being within quite extended limits;
c) reactivity stocking the components, for a time between 8 and 96 hours, which stocking can be carried out either after each lamination or all at once after two (even simultaneous) laminations.

When using spreading processes, liquid resins are deposited onto the surface of the fabric. The amount of the smeared resins can be adjusted through a sort of knife or "racla." The spread fabric enters a so-called "RAM" machine with or without a chain, and with or without pins. In the RAM machine operating areas, through a coordinated use of temperature (between 50°C and 210°C) and speed (between 2 and 40 meters/minutes) the deposited resins dry and polymerize sticking to the fabric and producing a two-layer sheet.

In order to obtain a three-layer sheet, the above two-layer sheet is submitted to a lamination process with another synthetic fabric.

The plasma treatment is a relatively new technology based on the use of plasma for causing a permanent modification - in the order of nanometers - of the fiber structure of a fabric.
In the process according to the invention, such treatment can be carried out with either one of two different technologies, namely a "cold" plasma treatment applied under vacuum, or "on-line" plasma treatment applied under atmospheric conditions.

According to the first technique, the fabric is rolled up on a cylinder placed inside the machine which is then closed and a vacuum is created inside it. The fabric moves from the cylinder on which it is wound toward another similar cylinder through a run defined by a variable number of other cylinders having smaller diameters. Spaces are thus formed between a small cylinder and the adjacent one, and instruments or other devices capable of delivering energy through a radio frequency generator are located in said spaces, while at the same time one or more organic gases are admitted into the machine.

According to the second technique, the rolled fabric is positioned behind the atmospheric plasma machine because - contrarily to the preceding case - the process is carried out in the atmosphere and therefore "in-line" with the other ennoblement machines. Even in this case, the fabric moves along a predetermined run on a variable number of cylinders between which suitable tools for delivering energy through a radio frequency generator are positioned, while at the same time one or more organic gases are made available.

Actually the "vacuum" plasma process appears to ensure a longer degree of permanence in comparison to the "atmospheric" plasma treatment.

As indicated above, the plasma treatment improves the gluing or adhesivizing or polymerizing of the products (including the membranes) that will be applied onto the plasma treated fabrics, as well as the resistance of the applied water-repellent layers.

In general terms, the process for manufacturing a synthetic fabric according the invention, provides for a weaving process of continuous synthetic fibers that can be circular and/or linear and/or ladderproof and/or with a shuttle, followed by a finishing process that can be a water and/or solvent scouring, a heat-bonding, a dying and/or a cross-dying, of the fabric or of the thread, or a finishing.

The fabric is then subjected to a plasma treatment (under vacuum and/or in the atmosphere according to the case), and then a second layer is applied which can be formed of resins and/or PU and/or PTFE and/or PTFE+PU membranes by means of spreading and/or lamination operations.

In order to form a third layer, a second fabric can be applied (even simultaneously with the preceding application), which fabric has been formed through a weaving process of continuous synthetic fibers that can be circular and/or linear and/or ladderproof and/or with a shuttle, and can either have been subjected to a plasma treatment or not.

The two- or three layer fabrics obtained through the above processes can withstand a number of washing and sterilization processes such as to render them advantageous in respect to the TNT ones, in spite of their higher manufacturing cost and even without considering the ecological advantages deriving from their reusing when compared with the disposable ones that are to be handled as special solid wastes.

The resulting two- or three-layer fabrics, exhibit characteristics that are quite useful in the medical field both for clothing and for surgical drape sheets since their adhesivizing allow them to withstand more than 50 industrial washing processes at over 85°C and as many industrial sterilization processes at over 110°C.

Although the invention has been illustrated with reference to preferred embodiments thereof, it is generally susceptible of other applications and modifications falling within the scope of the invention as will become evident to the skilled of the art.

## Claims

1. A synthetic fabric with liquids absorption capability for use in the medical field, comprising at least one layer of a continuous fiber synthetic fabric that has been subjected to plasma treatment, joined to a second layer formed by one or more layers of materials selected from: a resin layer, a PU membrane, a PTFE membrane, a PTFE+PU membrane.

2. A synthetic fabric as claimed in claim 1, **characterized in that** it comprises a third layer made up by another continuous fiber synthetic fabric.

3. A synthetic fabric as claimed in claim 2, **characterized in that** said third layer of synthetic fabric has been subjected to a plasma treatment.

4. A process for manufacturing a continuous fiber synthetic fabric comprising at least two layers, such process comprising the steps of:
- subjecting a first layer of synthetic fabric to a plasma treatment;
- joining said treated first layer with a second layer formed by one or more layers of materials selected from: a resin layer, a PU membrane, a PTFE membrane, a PTFE+PU membrane.

5. A process as claimed in claim 4, **characterized in that** that said joining is accomplished through spreading and/or laminating operations.

6. A process as claimed in claim 4 or 5, **characterized in that** it further comprises the application of a third layer of another synthetic fabric.

7. A process as claimed in claim 4, **characterized in that** it further comprises the steps of:
a) weaving said synthetic continuous fibers through a circular and/or linear and/or ladderproof and/or with a shuttle weaving ;
b) finishing said fabrics;
c) plasma treating said fabrics;
d) applying a second layer of resins and/or PU membranes and/or PTFE membrane and/or PTFE+PU membrane, through spreading and/or laminating operations;

8. A process as claimed in claims 7, **characterized in that** said step of weaving said synthetic continuous fibers is carried out through one or more than the followings: circular, rectilinear, ladderproof, shuttle weaving.

9. A process as claimed in claim 7, **characterized in that** said step of finishing the fabrics includes one or more of the following operations: water scouring, solvent scouring, heath-bonding, dying, cross-dying either of the fabric or of the thread, finishing.

10. A process as claimed in claim 6, **characterized in that** said step of plasma treatment comprises a treatment selected from a vacuum plasma treatment and an atmospheric plasma treatment.

11. A process as claimed in claim 7, **characterized by** further comprising the application of another fabric formed in accordance to the preceding step a), through laminating operations - even simultaneous - to form a third layer.

12. A process as claimed in claim 7, **characterized in that** that said other fabric has been subjected to plasma treatment.
